# EUROPÄISCHE PATENTSCHRIFT

(11) **EP 0 609 273 B1**
(45) Veröffentlichungstag und Bekanntmachung des Hinweises auf die Patenterteilung: **05.06.1996**
(21) Anmeldenummer: 92921109.2
(22) Anmeldetag: 14.10.1992
(51) Int. Cl.: C11D 3/22, C11D 3/12

(54) **WASCH- UND REINIGUNGSMITTEL MIT AUSGEWÄHLTEN BUILDER-SYSTEMEN**
WASHING AND CLEANING AGENTS WITH SELECTED BUILDER SYSTEMS
PRODUIT DE LAVAGE ET DE NETTOYAGE A SYSTEMES SELECTIONNES D'ADJUVANTS

(30) Priorität: 23.10.1991 DE 4134914
(43) Veröffentlichungstag der Anmeldung: 10.08.1994
(73) Patentinhaber: Henkel Kommanditgesellschaft auf Aktien, 40191 Düsseldorf (DE)
(72) Erfinder: ENGELSKIRCHEN, Konrad, D-4005 Meerbusch 3 (DE); FISCHER, Herbert, D-4000 Düsseldorf 1 (DE); KOTTWITZ, Beatrix, D-4000 Düsseldorf 13 (DE); UPADEK, Horst, D-4030 Ratingen 6 (DE); NITSCH, Christian, D-4000 Düsseldorf 13 (DE)
(86) Internationale Anmeldenummer: EP9202368
(87) Internationale Veröffentlichungsnummer: WO9308251

(56) Entgegenhaltungen:
- EP-A- 0 425 369
- EP-A- 0 455 522
- FR-A- 872 917
- FR-A- 2 659 979
- US-A- 3 790 561

## Beschreibung

Die Erfindung betrifft einen neuen Vorschlag zum Aufbau von Builder-Systemen zum Einsatz in tensidhaltigen Wasch- und/oder Reinigungsmittelgemischen, die als bevorzugt phosphatfreie Stoffgemische der hier betroffenen Art aufgebaut sein können. Die Erfindung will dabei insbesondere eine weitergehende Verbesserung der sogenannten Co-Builder-Komponenten in Builder-Systemen ermöglichen, die als Hauptbuilder feinteilige und unter Einsatzbedingungen unlösliche, insbesondere entsprechende mineralische Komponenten zusammen mit einem wenigstens anteilsweise löslichen Co-Builder enthalten, wobei üblicherweise dieser Co-Builder-Anteil in vergleichsweise geringeren Mengen vorliegt.

In Wasch- und Reinigungsmitteln wird heute als Phosphatsubstitut feinteiliger Zeolith, insbesondere Zeolith-NaA, eingesetzt, der zur Bindung der Härtebildner - vor allem Calcium- und/oder Magnesiumionen - im Waschwasser und Schmutz befähigt ist. In beträchtlichem Ausmaß, insbesondere im Rahmen der Textilwaschmittel, wird allerdings die Mitverwendung sogenannter Co-Builder beziehungsweise Co-Builder-Systeme notwendig, insbesondere um unerwünschten Inkrustationen entgegenzuwirken. In großem Umfange werden heute zusammen mit Zeolith-NaA polymere Polycarboxylate, insbesondere Co-Polymere auf Basis von Acrylsäure und Maleinsäure, gemeinsam mit Soda zu diesem Zweck eingesetzt. Zusätzlich werden Komplexbildner, wie Salze der Nitrilotriessigsäure (NTA) und Phosphonsäurederivate (HEDP) mitverwendet. Co-Builder-Kombinationen dieser Art wirken in Wasch- und Reinigungsmitteln der hier betroffenen Art der Ausfällung schwerlöslicher Calciumsalze und damit den dadurch hervorgerufenen Inkrustationen und der Vergrauung des Gewebes entgegen. Ein erwünschtes Ergebnis ist unter anderem auch der mit solchen Builder-Kombinationen erzielbare höhere Weißgrad der Textilien.

Aus jüngerer Zeit sind eine Reihe von Vorschlägen bekannt, Builder-Systeme der hier geschilderten Art wenigstens anteilsweise durch andere Komponenten zu ersetzen. Grundlage hierzu sind unter anderem Überlegungen zu möglichen unerwünschten Sekundärwirkungen nach Ablassen der verbrauchten Wasch- und Reinigungslösungen in das Abwassersystem.

Als Substitute beziehungsweise als Teilsubstitute für Phosphate und Zeolithe sind zum Beispiel kristalline schichtförmige Natriumsilikate beschrieben worden. So schildert die europäische Patentanmeldung EP 164 514 eine phosphatfreie Gerüststoffkombination, die hauptsächlich kristalline Schichtsilikate einer ausgewählten Strukturformel NaMSiₓO₂₊₁·yH₂O enthält, wobei M Natrium oder Wasserstoff bedeutet, x eine Zahl von 1,9 bis 4 und y eine Zahl von 0 bis 20 sind und wobei bevorzugte Werte für x 2, 3 oder 4 sind. Diese Schichtsilikate können als Wasserenthärtungsmittel sowohl separat als auch in Wasch- und Reinigungsmitteln zusammen mit anderen Gerüststoffen beziehungsweise Co-Buildern wie Phosphaten, Zeolith, weiteren Silikaten, Phosphonaten und Polycarboxylaten eingesetzt werden. Verwiesen wird weiterhin auf die Veröffentlichungen F.J. Dany et al. "Kristallines Schichtsilikat - ein neuer Builder", Seifen - Öle - Fette - Wachse 20/1990, 805 bis 808, sowie K.-H. Bergk et al. "Herstellung und Verwendung von Magadiit als Phosphatsubstitut in Waschmitteln", Seifen - Öle - Fette - Wachse 15/1987, 555 bis 561, sowie die dort zitierte Literatur.

Die deutsche Offenlegungsschrift DE 26 56 009 beschreibt Textilwaschmittel, die 12 bis 25 Gew.-% Zeolith, insbesondere des Typs 4A, 5 bis 20 Gew.-% eines Natriumsilikats, sowie ein Peroxybleichmittel enthalten. Nach den Angaben dieser Literaturstelle sollen unerwünschte Ablagerungen der wasserunlöslichen Zeolithteilchen auf der Wäsche dadurch verhindert werden, daß 0,3 bis 3 Gew.-% eines Polymeren aus der Gruppe Carboxymethylcellulose, niedere Alkylcellulose, Hydroxy-Niederalkyl-Cellulose, Polyvinylalkohol, Polyvinylacetat und/oder Polyvinylpyrrolidon eingesetzt werden.

Die europäische Patentanmeldung EP 010 247 beschreibt Textilwaschmittel, die Tenside in üblichen Mengen, Zeolith, Alkalisilikat und gegebenenfalls ein Peroxybleichmittel enthalten. Durch den Zusatz wasserlöslicher organischer Komplexbildner aus der Gruppe der substituierten Alkandi- und Alkantri-Phosphonsäuren, die in Form ihrer Alkali- und/oder Erdalkalisalze vorliegen, wird ein Waschmittel erhalten, das nicht nur eine gute Primär-Waschwirkung aufweist, sondern das auch die Bildung von Faserinkrustationen reduziert. Zusätzlich wird eine erhöhte Bleichstabilität erzielt. Das Mittel enthält 20 bis 65 Gew.-% eines feinteiligen Zeoliths, wie er in der deutschen Patentschrift DE 24 12 837 beschrieben ist, sowie 1 bis 7 Gew.-% festes, pulverförmiges Natriumsilikat der molaren Zusammensetzung Na₂O:SiO₂ von 1:2 bis 1:2,2. Zusätzlich ist die Mitverwendung von wasserlöslichen organischen Komplex-bildenden Gerüststubstanzen sowie weiteren Waschmittelzusätzen vorgesehen.

Entsprechende Kombinationen von mineralischen feinteiligen und unter Einsatzbedingungen unlöslichen Hauptbuilder-Komponenten in Kombination mit löslichen Co-Buildern, insbesondere auf Basis von Polycarboxylaten und deren Derivaten sind weiterhin beispielsweise beschrieben in den europäischen Patentanmeldungen EP 240 356, EP 337 217, EP 337 219 und EP 405 122.

Aus der französischen Patentanmeldung FR-A-2 659 979 und der deren Priorität in Anspruch nehmenden europäischen Patentanmeldung EP-A-455 522 sind gering phosphathaltige Waschmittel bekannt, welche Zeolith und bestimmte oxidierte Polysaccharide enthalten, die durch Oxidation der endständigen Aldehydgruppe des Polysaccharids entstehen.

Gegenstand der älteren deutschen Patentanmeldung P 41 06 880 der Anmelderin sind Waschmittel, insbesondere Textilwaschmittel, die Tenside, Zeolith und Alkalisilikat sowie gegebenenfalls ein Peroxybleichmittel enthalten, wobei es hier durch Auswahl eines bestimmten feinteiligen hydratisierten Zeoliths mit einer mittleren Teilchengröße von bis 5 µm in Kombination mit beschränkten Mengen eines festen ausgewählten Alkalisilikats möglich wird, die Mittel frei von wasserlöslichen organischen Komplexbildnern aus der Gruppe der substituierten Phosphonate, frei von polymeren Polycarboxylaten und frei von Alkalicarbonaten auszugestalten. Gleichwohl werden befriedigende Waschergebnisse insbesondere auch bezüglich der Sekundärwirkungen, d.h. zu den jeweils bestimmten Prozentgehalten an Asche und Inkrustation, erhalten.

Die Lehre der vorliegenden Erfindung geht von der Aufgabe aus, auf Waschund Reinigungsmittelrezepturen der eingangs genannten Art zurückzugreifen, die zum Ersatz des früher üblichen Gerüststoff- beziehungsweise Builder-Systems auf Phosphatbasis Kombinationen von feinteiligen unlöslichen mineralischen Hauptbuilder-Komponenten mit Inkrustations-verhindernden Co-Buildern einsetzen. Die Erfindung will dabei insbesondere Co-Builder zur Verfügung stellen, die einerseits im Einsatz hochwirksam sind, andererseits aber nach Abschluß des Wasch- und Reinigungsverfahrens als vergleichsweise problemfreie Mischungskomponenten im Abwasser anzusehen sind. Die Erfindung will diese Zielvorstellung insbesondere mit Co-Builder-Komponenten auf Basis derivatisierter Naturstoffe erreichen, die natürlichen Abbauprozessen zugänglich sind und keine unerwünschten Sekundärwirkungen, beispielsweise im Sinne einer Schwermetallremobilisierung, auslösen.

Die erfindungsgemäße Lehre geht von der überraschenden Erkenntnis aus, daß ausgewählte Polyglucosanderivate, insbesondere entsprechende Derivate auf Stärkebasis, hochwirksame Co-Builder-Komponenten im angegebenen Sinne sein können, die gleichzeitig in einem einfachen Verfahren kostengünstig zu gewinnen sind.

Gegenstand der Erfindung sind dementsprechend tensidhaltige Wasch-und/oder Reinigungsmittel, insbesondere Textilwaschmittel, enthaltend feinpartikuläre, unter Einsatzbedingungen unlösliche Builder-Komponenten zusammen mit einer untergeordneten Menge wenigstens anteilsweise löslicher Co-Builder, gewünschtenfalls zusammen mit Bleichmitteln sowie weiteren üblichen Bestandteilen von Wasch- und Reinigungsmitteln. Kennzeichnend für die Erfindung ist, daß diese Mittel als Co-Builder ausgewählte Oxidationsprodukte von Polyglucosanen, die im statistischen Mittel zu wenigstens 15 Mol-% aus oxidierten Anhydroglucoseeinheiten der Formel I, 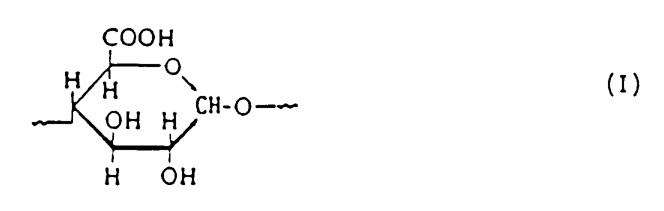 das heißt aus 1,4-glykosidisch verknüpften Glucuronsäure-Einheiten, bestehen und mittlere Molekulargewichte von höchstens etwa 15 000 aufweisen, und/oder deren lösliche Salze enthalten. Bevorzugte Salze sind die Alkalisalze, insbesondere die entsprechenden Natriumsalze.

Gegenstand der Erfindung ist insbesondere die Verwendung von derartigen Co-Buildern auf Basis der Oxidationsprodukte von Polyglucosanen zur Verringerung der Inkrustationsbildung bei der Textilwäsche mit phosphatfreien Textilwaschmitteln auf Basis feinteiliger unlöslicher, insbesondere mineralischer Hauptbuilder-Komponenten. Der im Rahmen der Erfindung wichtigste feinteilige unlösliche Hauptbuilder für die Kombination mit den zuvor definierten Co-Buildern auf Basis der in 6-Stellung wenigstens anteilsweise derivatisierten Polyglucosane ist Natrium-Zeolith-NaA, wie er beispielsweise im Zusammenhang mit Textilwaschmitteln in der deutschen Patentschrift DE 24 12 837 beschrieben ist.

Die erfindungsgemäße Lehre geht von der Feststellung aus, daß Polyglucosane durch eine gezielte aber vergleichsweise einfache Derivatisierung zu hochwirksamen Co-Builder-Komponenten im hier geschilderten Sinne umgewandelt werden können. Eine besonders wichtige Rolle spielen dabei entsprechende Verbindungen auf Stärkebasis. Die Erfindung ist darauf allerdings nicht eingeschränkt. Auch andere Polymerverbindungen auf Basis von Anhydroglucoseeinheiten, hier insbesondere die Cellulose, lassen sich zu wirkungsvollen Co-Buildern im Sinne der erfindungsgemäßen Lehre umwandeln. Der besondere Vorteile für den erfindungsgemäß bevorzugten Einsatz entsprechender Stärke-basierter Derivate liegt unter anderem darin, daß von der Stärke ausgehend in einer sehr einfachen Reaktion die zwei entscheidenden Umwandlungsstufen in einem Verfahrensschritt zusammengefaßt werden können, die für die Ausbildung des erfindungsgemäßen Co-Builders wesentlich sind: Einerseits der hinreichende Abbau des Molekulargewichts des Stärkemoleküls natürlichen Ursprungs und andererseits die weitgehend selektive Oxidation der primären Alkoholgruppe der Anhydroglucoseeinheiten zur Carboxygruppe.

Zur Herstellung von Polysaccharid-Derivaten durch oxidative Behandlung von beispielsweise Cellulose, Stärke und Dextrinen besteht umfangreiches Wissen. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.0. S. 2042 ff, insbesondere S. 2124 ff (Oxidationsprodukte der Cellulose) und S. 2166 ff (Oxidierte Stärken). Verwiesen sei weiter auf die Veröffentlichung "Cellulose Chemistry and Its Applications" (1983), John Wiley & Sons, Chichester, GB, dort insbesondere T.P.Nevell,-"Oxidation of Cellulose" (Kapitel 10) sowie die umfangreiche dort zitierte Literatur, a.a.O S. 262 bis 265.

Grob zusammenfassend gilt: Eine Vielzahl von Oxidationsmitteln ist für die Oxidation von Polyglucosanen gebräuchlich. Genannt seien beispielsweise (Luft)-Sauerstoff, Wasserstoff-Peroxid, Natriumhypochlorit beziehungsweise -bromit, Periodsäure beziehungsweise Periodate, Blei(IV)-Acetat, Stickstoffdioxid und Cer(IV)-Salze. Diese Oxidationsmittel reagieren sehr unterschiedlich mit den Anhydroglucoseeinheiten, vgl. beispielsweise die Formelbilder in Houben-Weyl a.a.0. S. 2124. Bekannt ist, daß bei der Einwirkung von Stickstoffdioxid auf Cellulose die Oxidation der primären Alkoholgruppe zur Carboxygruppe die weit überwiegende Reaktion ist. Das Oxidationsmittel kann dabei gasförmig oder gelöst in einem inerten organischen Lösungsmittel eingesetzt werden, vgl. auch hier Houben-Weyl a.a.0. S. 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheit zur Carboxygruppe bewerkstelligen. Von diesem Wissen des Standes der Technik geht die erfindungsgemäße Lehre aus.

So können beispielsweise Monocarboxylstärken mit frei wählbarem Umsatzgrad der primären Alkoholgruppen durch deren selektive Oxidation mit Stickstoffdioxid bei niedrigen Temperaturen auch ohne Hilfsmittel, zum Beispiel Lösungsmittel oder Katalysatoren, hergestellt werden. Dabei ist auch die nahezu quantitative weitgehend selektive Umsetzung der Bausteine des Stärkemoleküls möglich.

Für den erfindungsgemäßen Zweck des Einsatzes solcher Naturstoffderivate als Co-Builder in den eingangs geschilderten Builder-Systemen ist allerdings eine solche quantitative Umsetzung nicht erforderlich und in einer wichtigen Ausführungsform nicht einmal wünschenswert. Wesentlich ist vielmehr das Zusammenspiel der zwei folgenden Parameter: Hinreichende Umwandlung der primären Alkoholgruppierungen zu Carboxygruppen, sowie andererseits Regulierung des mittleren Molekulargewichts des natürlichen Polyglucosan-Moleküls zu hinreichend abgebauten Teilstücken. Der erste dieser beiden Parameter dürfte für die Interaktion beispielsweise mit den Härtebildnern funktionelle Bedeutung besitzen, während das hinreichend eingeschränkte mittlere Molgewicht der modifizierten Polyglucosan-Bausteine unter anderem wichtig sein kann für die hinreichende Löslichkeit des Co-Builders unter Einsatzbedingungen.

Zu diesen beiden Parametern gilt im einzelnen das folgende:

Die bevorzugte Untergrenze für den Gehalt an Glucuronsäure-Einheiten gemäß Formel I in den Polyglucosanderivaten liegt bei etwa 25 Mol-% und vorzugsweise bei wenigstens etwa 35 Mol-% bis 40 Mol-%. Im Rahmen der Erfindung kann es wichtig sein, daß keine wesentlichen Mengen anderer Oxidationsfolgeprodukte im selektiv oxidierten Polyglucosan-Molekül vorliegen, wobei hier Anteile unterhalb 10 Mol-% und insbesondere unterhalb 5 Mol-% besondere Bedeutung haben können. Die nahezu quantitative Umwandlung der primären Alkoholgruppen in Carboxygruppen ist möglich, so daß sich als Obergrenze für den entsprechenden Gehalt an Glucuronsäure-Einheiten etwa 95 Mol-% bis 98 Mol-% ergeben. Für den praktischen Einsatz können entsprechende Oxidationsprodukte besonders geeignet sein, die durch Gehalte im Bereich von etwa 35 Mol-% bis 80 Mol-% an selektiv oxidierten Gruppierungen gekennzeichnet sind, wobei in einer wichtigen Ausführungsform der Gehalt dieser oxidierten Anhydroglucoseeinheiten im Bereich von etwa 40 Mol-% bis 60 Mol-% liegt.

Als mittlere Molgewichte für die letztlich vorliegenden Polyglucosan-Derivate ist insbesondere der Bereich von etwa 1 000 bis 10 000 und vorzugsweise der Bereich von etwa 1 500 bis 5 000 zu nennen. Im Gebiet der Stärke-Derivatisierung im erfindungsgemäßen Sinne hat sich gezeigt, daß im Rahmen der oxidativen Behandlung der üblicherweise beschränkte Wassermengen enthaltenden Trockenstärke mit NO₂ und gegebenenfalls Überführung der Oxidationsprodukte in wasserlösliche Salze neben der weitgehend selektiven Oxidation in der primären Alkoholgruppen ein Abbau der Molmasse des Stärkemoleküls in solchem Ausmaß stattfindet, daß die anfallenden derivatisierten Polyglucosane als Co-Builder besonders geeignet sind. Ihr mittleres Molekulargewicht liegt üblicherweise im Bereich von etwa 1 500 bis 3 000 oder 4 000. Bevorzugt werden derartige Co-Builder durch Oxidation und hydrolytische Spaltung von feinteiliger nativer Stärke als Wirbelschicht in einer NO₂/N₂O₄-haltigen Gasphase hergestellt.

Der Einsatz von oxidierten Polysaccharidverbindungen zur Waschkraftverstärkung von Wasch- und/oder Reinigungsmitteln ist an sich seit Jahrzehnten bekannt und immer wieder untersucht worden. Verwiesen wird beispielsweise auf die niederländische Patentschriften NL 69 883 sowie NL 78 087. Der Ersatz von Builder-Systemen auf Phosphatbasis, insbesondere von Natriumtripolyphosphat durch 6-Carboxycellulose, wird in den US-amerikanischen Patentschriften US 3 740 339 und US 3 790 561 beschrieben. Auch die niederländische Patentanmeldung NL 70/02 500 will oxidierte Polysaccharid-Derivate als Builder-System zur Steigerung der Waschkraft in insbesondere Textilwaschmitteln einsetzen. Hier ist es allerdings nicht auf selektiv am C₆-Atom oxidierte Derivate abgestellt, die Druckschrift sieht vielmehr eine substantielle Spaltung der Anhydroglykoseeinheiten zwischen C₂ und C₃ vor und will von den dabei entstehenden Oxidationsprodukten Gebrauch machen.

Schließlich beschreibt die erst kürzlich veröffentlichte europäische Patentanmeldung EP 425 369 tensidhaltige Stoffgemische zur Textilwäsche, die ein Builder-System aus den folgenden drei Komponenten enthalten: Konventionelle Phosphatverbindung, insbesondere Natriumtripolyphosphat, Zeolith und Oxidationsprodukte von Cellulose, Stärke oder Glukosesirup. Nachvollziehbare Angaben zur Herstellung der dort beschriebenen oxidierten Oligosaccharidverbindungen sind nicht angegeben. Unklar ist damit, welche Struktur den Oxidaten im einzelnen zukommt. Die einzig konkrete Aussage bezieht sich auf einen oxidierten Glukosesirup, der durch katalytische Oxidation hergestellt worden sein soll, vgl. a.a.0. S. 5, 31/32. Darüber hinaus wird eine Stabilisierung der primär anfallenden Oligosaccharidoxidate durch eine katalytische Hydrierung als wünschenswert bezeichnet - siehe a.a.O. S. 3, 36 bis 50. Unter Berücksichtigung des Fachwissens kann es sich hier nur um Oligosaccharidoxidate handeln, die konstitutionsmäßig mit den erfindungsgemäß definierten Co-Builder-Komponenten nicht deckungs-gleich sind. Unabhängig davon fordert die Lehre dieser zuletzt genannten Druckschrift zwingend die Mitverwendung beachtlicher Mengen an konventionellen Phosphaten, während die erfindungsgemäße Lehre, wie eingangs dargestellt, insbesondere darauf zugeschnitten ist, auf dem Gebiet der phosphatfreien Wasch- und Reinigungsmittel Builder-Kombinationen zu schaffen, die als Hauptkomponenten die bewährten feinteiligen mineralischen Bestandteile wie Zeolith-NaA enthalten, bezüglich ihrer Co-Builder-Komponenten aber auf die bis heute hier üblichen Bestandteile vollständig verzichten können.

Die erfindungsgemäße Lehre, die zuvor definierten selektiv an der primären Alkoholgruppe derivatisierten Polyglucosane in diesem Sinne als alleinige Co-Builder unter Verzicht auf organische Komplexbildner aus der Gruppe der synthetischen polymeren Carboxylate, der substituierten Phosphonate und/oder des NTA ersetzen zu können und dabei gleichzeitig zu vollständig phosphatfreien Wasch- und Reinigungsmitteln zu kommen, leitet sich aus der zuletzt genannten Druckschrift nicht ab.

Die Co-Builder im Sinne der erfindungsgemäßen Definition werden in den Wasch- und Reinigungsmitteln üblicherweise in Mengen von etwa 0,5 Gew.-% bis 15 Gew.-% und insbesondere im Bereich von etwa 0,5 Gew.-% bis 10 Gew.-% - bezogen jeweils auf das Gesamtgewicht der Reinigungsmittel - eingesetzt. Zweckmäßig können häufig für Textilwaschmittel Co-Buildermengen im Bereich von 2 Gew.-% bis 7 Gew.-% sein. Dabei ergibt sich dieser Betrag aus den hier üblicherweise eingesetzten Mengen an insbesondere Zeolith-NaA als Hauptbuilder, auf die im nachfolgenden noch eingegangen wird. Der Co-Builder ist gegenüber der Hauptbuilder-Komponente mengenmäßig üblicherweise eine untergeordnete Komponente. Die Hauptbuilder-Komponente macht mengenmäßig gesehen üblicherweise mindestens das Doppelte und vorzugsweise mindestens das etwa 3- bis 4-fache - bezogen jeweils auf die Menge an Co-Builder im Sinne der Erfindung - aus.

Die Zusammensetzung der Wasch- und/oder Reinigungsmittel kann ansonsten im Rahmen bekannter Rezepturen praktisch beliebig gewählt werden. Lediglich beispielhaft und zusammenfassend sind dementsprechend die nachfolgenden Angaben zu verstehen.

Wasch- und Reinigungsmittel, insbesondere Textilwaschmittel, enthalten als Hauptkomponenten üblicherweise Tenside, das Builder-System im erfindungsgemäßen Sinne, Alkalisierungsmittel wie lösliche Alkalisilikate, gegebenenfalls ein Peroxybleichmittel und die üblichen sonstigen Wasch- beziehungsweise Reinigungsmittelbestandteile, wie Schauminhibitoren, optische Aufheller und/oder Vergrauungsinhibitoren, Enzyme, textilweichmachende Stoffe, Farb- und Duftstoffe sowie gegebenenfalls Neutralsalze, Lösungsmittel und Wasser.

Der Gesamtgehalt der Mittel an Tensiden liegt im allgemeinen zwischen 5 und 40 Gew.-% und kann vorzugsweise 5 bis 30 Gew.-% und insbesondere 8 bis 25 Gew.-% betragen. Übliche Tenside für Wasch- und Reinigungsmittel zählen zu den Gruppen der anionischen, der nichtionischen und/oder der zwitterionischen Tenside. Insbesondere kommen als Aniontenside Sulfonate und Sulfate sowie Seifen aus vorzugsweise natürlichen Fettsäuren beziehungsweise Fettsäuregemischen in Betracht. Als Tenside vom Sulfonattyp werden beispielsweise C₉₋₁₃-Alkylbenzolsulfonate, Olefinsulfonate, Ester von alpha-Sulfofettsäuren oder alpha-Sulfofettsäure-disalze eingesetzt. Geeignete Tenside vom Sulfattyp sind die Schwefelsäuremonoester aus primären gesättigten oder ungesättigten Alkoholen natürlichen oder synthetischen Ursprungs, d.h. aus C₁₂₋₁₈-Fettalkoholen oder aus C₁₀₋₂₀-Oxoalkoholen, und diejenigen sekundärer Alkohole dieser Kettenlänge. Auch die Schwefelsäuremonoester der mit 1 bis 6 Mol Ethylenoxid (E0) umgesetzten Alkohole kommen in Betracht. Bevorzugt werden die genannten Alkylbenzolsulfonate und besonders bevorzugt die genannten Fettalkoholsulfate eingesetzt. Als nichtionische Tenside sind vor allem Anlagerungsprodukte von vorzugsweise 2 bis 20 Mol E0 an 1 Mol einer aliphatischen Verbindung mit im wesentlichen 10 bis 20 Kohlenstoffatomen aus der Gruppe der Alkohole, Carbonsäuren, Fettamine, Carbonsäureamide und Alkansulfonamide von Interesse. Wichtig sind neben den wasserlöslichen Niotensiden aber auch nicht beziehungsweise nicht vollständig wasserlösliche Polyglykolether mit 2 bis 7 Ethylenglykoletherresten im Molekül, insbesondere dann, wenn sie zusammen mit wasserlöslichen nichtionischen oder anionischen Tensiden eingesetzt werden. Außerdem können als nichtionische Tenside auch Alkylpolyglykoside der allgemeinen Formel R-O-(G)ₓ eingesetzt werden, in der R einen primären geradkettigen oder in 2-Stellung methylverzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht und der Oligomerisierungsgrad x zwischen 1 und 10 liegt.

Die Menge des feinteiligen, bevorzugt mineralischen Hauptbuilder-Bestandteils - insbesondere Zeolithe in Waschmittelqualität und/oder kristalline Alkalisilikate der eingangs genannten Art - liegt üblicherweise im Bereich von etwa 10 bis 65 Gew.-%, vorzugsweise von etwa 20 bis 50 Gew.-% der Wasch- und Reinigungsmittel.

Feinteiliger hydratisierter Zeolith-NaA weist im allgemeinen einen Wassergehalt von 17 bis 25 Gew.-% auf. Die Mengenangaben für Zeolith beziehen sich jedoch auf die wasserfreie Aktivsubstanz. Neben Zeolithen vom A-Typ sind ferner brauchbar Gemische aus Zeolith-NaA und NaX, wobei der Anteil des Zeoliths-NaX in derartigen Gemischen zweckmäßigerweise unter 30 % liegt.

Zu den üblichen Alkalisierungsmitteln zählen Alkalisilikate. Bevorzugte Alkalisilikate sind die Natriumsilikate, insbesondere die amorphen Natriumsilikate, mit einem molaren Verhältnis Na₂O:SiO₂ von 1:2 bis 1:3. Derartige amorphe Alkalisilikate sind beispielsweise unter dem Handelsnahmen Portil^{R} im Handel erhältlich.

Der Gehalt der Wasch- und Reinigungsmittel an Alkalisilikaten kann im Bereich von beispielsweise etwa 2 bis 10 Gew.-% liegen, bezogen auf wasserfreie Substanz. Gehalte an amorphem Natriumsilikat im Bereich von etwa 3 bis 8 Gew.-%, bezogen auf wasserfreie Substanz, können bevorzugt sein. Das Gewichtsverhältnis von Zeolith zu amorphem Silikat - jeweils bezogen auf wasserfreie Substanz - kann beispielsweise im Bereich von etwa 4:1 bis 10:1 liegen.

Bevorzugte Wasch- und Reinigungsmittel, insbesondere Textilwaschmittel, enthalten Peroxybleichmittel und insbesondere Peroxybleichmittel in Kombination mit Bleichaktivatoren. Unter den als Bleichmittel dienenden, in Wasser H₂O₂ liefernden Verbindungen haben das Natriumperborat-Tetrahydrat (NaBO₂·H₂O₂·3H₂O) und das Natriumperborat-Monohydrat (NaBO₂·H₂O₂) besondere Bedeutung. Weitere brauchbare Bleichmittel sind beispielsweise Peroxycarbonat (Na₂CO₃·1,5 H₂O₂) oder persaure Salze organischer Säuren, wie Perbenzoate oder Salze der Diperdodecandisäure. Geeignete Bleichaktivatoren für diese Peroxybleichmittel sind beispielsweise die mit H₂O₂ organische Persäuren bildenden N-Acyl- beziehungsweise 0-Acyl-Verbindungen, vorzugsweise N,N'-tetraacylierte Diamine wie N,N,N',N'-Tetraacetylethylendiamin. Der Gehalt der Mittel an Peroxybleichmittel beträgt vorzugsweise etwa 10 bis 30 Gew.-%, insbesondere in Kombination mit etwa 1 bis 5 Gew.-% eines Bleichaktivators.

In der bevorzugten Ausführungsform enthalten die Wasch- und Reinigungsmittel der Erfindung keine wasserlöslichen organischen Komplexbildner aus der Gruppe der Phosphonate, sowie keine Co-Builder auf Basis synthetischer polymerer Polycarboxylate, beispielsweise Polyacrylate, Polymethacrylate, Polymaleate oder Copolymere der Acrylsäure mit Maleinsäure beziehungsweise Maleinsäureanhydrid. Auch weitere Komplexbildner wie die Salze der Nitrilotriessigsäure sind in bevorzugten Mitteln der Erfindung nicht enthalten. Auch auf den Zusatz von Soda kann gewünschtenfalls verzichtet werden.

Die zuvor bereits erwähnten sonstigen Wasch- und Reinigungsmittel-Bestandteile, die üblicherweise jeweils nur in kleinen Mengen vorliegen, können insbesondere bis zu 40 Gew.-% vorzugsweise 5 bis 30 Gew.-% ausmachen. Zu dieser Klasse der Kleinkomponenten gehören beispielsweise Schauminhibitoren, Vergrauungsinhibitoren, optische Aufheller, Farbstoffe, Duftstoffe, Farbübertragungsinhibitoren und Enzyme, insbesondere von der Art der Proteasen, Lipasen und/oder Amylasen. Die Enzyme können an Trägerstoffen adsorbiert und/oder in Hüllsubstanzen eingebettet sein. Geeignete nicht-tensidartige und bevorzugt eingesetzte Schauminhibitoren sind Organopolysiloxane und deren Gemische mit mikrofeiner, gegebenenfalls silanierter Kieselsäure. Geeignet können auch Gemische verschiedener Schauminhibitoren sein, z.B. solche aus Siliconen und Paraffinen oder Wachsen. Bevorzugt sind die Schauminhibitoren an eine granulare, in Wasser lösliche, beziehungsweise dispergierbare Trägersubstanz gebunden.

Die erfindungsgemäßen Wasch- und/oder Reinigungsmittel liegen bevorzugt als schüttfähige, pulverförmige oder granulare Präparate vor, die in an sich üblicher Weise, beispielsweise durch Mischen, Granulieren und/oder durch Sprühtrocknung mit gegebenenfalls anschließender Nachverdichtung hergestellt werden können. Im einzelnen gelten hier die bekannten Angaben des zugehörigen druckschriftlichen Standes der Technik. Wenigstens anteilsweise können diese Mittel beziehungsweise Einzelkomponenten oder Unterkombinationen mehrerer Elemente in konventioneller Weise durch Sprühtrocknung in Trockenform erhalten werden, die dann mit insbesondere temperatursensitiven Komponenten abgemischt werden.

Eine besondere Ausführungsform der erfindungsgemäßen Mittel umfasst Waschmittel mit Schüttgewichten von mindestens 650 g/l, vorzugsweise von 700 g/l bis 1200 g/l und insbesondere 800 g/l bis 1000 g/l. Bei diesen kann es sich um durch Granulierverfahren, beispielsweise durch Naßgranulation und anschließende Trocknung, insbesondere Wirbelschichttrocknung, hergestellte Mittel handeln. Selbstverständlich können auch verpreßte waschaktive Zubereitungen, hergestellt durch beispielsweise Kompaktierung oder Pelletierung, den erfindungsgemäßen Co-Builder enthalten.

Bevorzugt ist in diesem Zusammenhang ein gemäß dem Verfahren der internationalen Patentanmeldung WO-A-91/02047 hergestelltes Produkt. Dabei handelt es sich um ein durch strangförmiges Verpressen eines homogenen Vorgemisches, das gegebenenfalls unter Zusatz eines Plastifiziermittels erfolgen kann, über Lochformen, welche vorzugsweise eine Öffnungsweite von 0,5 mm bis 5 mm aufweisen, anschließendes Zerkleinern des Extrudats mittels einer Schneidevorrichtung und nachfolgende Behandlung in einem Rondiergerät hergestelltes Waschmittel oder Waschmittelvorprodukt, das auch in Abmischung mit weiteren Waschmittelbestandteilen eingesetzt werden kann.

Eine bevorzugte Ausführungsform eines erfindungsgemäßen festen granularen Universalwaschmittels mit einem Schüttgewicht im Bereich von 700 g/l bis 1200 g/l, insbesondere von 800 g/l bis 1000 g/l enthält
15 Gew.-% bis 25 Gew.-% Aniontensid,
1 Gew.-% bis 15 Gew.-% nichtionisches Tensid,
15 Gew.-% bis 40 Gew.-% Alkalialumosilikat, insbesondere Zeolith NaA
2 Gew.-% bis 15 Gew.-% erfindungsgemäßen Cobuilder,
10 Gew.-% bis 30 Gew.-% Bleichmittel,
2 Gew.-% bis 10 Gew.-% Bleichaktivator,
bis zu 10 Gew.-%, vorzugsweise 1 Gew.-% bis 5 Gew.-% Alkalisilikat,
bis zu 15 Gew.-%, vorzugsweise 3 Gew.-% bis 12 Gew.-% Alkalicarbonat,
bis zu 4 Gew.-%, vorzugsweise 0,5 Gew.-% bis 3 Gew.-% Alkalisulfat,
0,1 Gew.-% bis 10 Gew.-% mindestens einer Substanz aus der Gruppe der Schauminhibitoren, Enzyme, Vergrauungsinhibitoren, optischen Aufheller, Farbstoffe, Stellmittel, Füllmittel, und
1 bis 20 Gew.-% Wasser.

Einer weitere bevorzugte Ausführungsform der erfindungsgemäßen Mittel betrifft Fein- und Buntwaschmittel mit einem Schüttgewicht im Bereich von 700 g/l bis 1200 g/l, insbesondere von 800 g/l bis 1000 g/l, auf Basis der folgenden Zusammensetzung:
5 Gew.-% bis 15 Gew.-%, insbesondere 6 Gew.-% bis 13 Gew.-% anionisches Tensid, insbesondere aus der Gruppe der Fettalkoholsulfate,
10 Gew.-% bis 22 Gew.-%, insbesondere 12 Gew.-% bis 20 Gew.-% nichtionisches Tensid, insbesondere aus der Gruppe der Alkylpolyethylenglykolether,
20 Gew.-% bis 45 Gew.-%, insbesondere 25 Gew.-% bis 30 Gew.-% Alkalialumosilikat, insbesondere Zeolith NaA,
5 Gew.-% bis 20 Gew.-% erfindungsgemäßer Cobuilder,
2 Gew.-% bis 10 Gew.-%, insbesondere 4 Gew.-% bis 8 Gew.-% Alkalicarbonat,
bis zu 10 Gew.-%, insbesondere 1 Gew.-% bis 5 Gew.-% Alkalisilikat,
bis zu 4 Gew.-%, insbesondere 0,5 Gew.-% bis 3 Gew.-% Alkalisulfat,
0,1 bis 2,5 Gew.-% Schauminhibitor,
0,5 Gew.-% bis 5 Gew.-% Farbübertragungsinhibitor, insbesondere Polyvinylpyrrolidon,
0,1 Gew.-% bis 3 Gew.-% eines oder mehrerer Stoffe aus der Gruppe der Textilweichmacher, Vergrauungsinhibitoren, Farbstoffe und Duftstoffe, und
5 Gew.-% bis 20 Gew.-% Wasser.

### Beispiele

In den nachfolgenden Beispielen wird zunächst die Herstellung der erfindungsgemäßen Co-Builder-Komponenten auf Basis der Oxidationsprodukte von Polyglucosanen durch selektive Oxidation und partielle Depolymerisation von Kartoffelstärke beschrieben (Beispiele 1 bis 3). Die in diesen Beispielen dargestellten Produkte unterscheiden sich durch das Ausmaß der Umwandlung der primären Alkoholgruppen in den Anhydroglucoseeinheiten zu Carboxygruppen. Die theoretische Säurezahl (SZ) bei 100%iger Umsetzung entspricht dem Zahlenwert von 319. Wie den Zahlenangaben zur Säurezahl zu entnehmen ist, in den Beispielen 1 bis 3 mit abnehmenden Werten des jeweiligen Umsetzungsgrades in der Oxidationsreaktion gearbeitet worden.

### Beispiel 1

200 g Kartoffelstärke mit einem Feuchtigkeitsgehalt von ca. 8 Gew.-% wurden in einem Exsikkator über rauchender Salpetersäure bei Raumtemperatur (ca. 20 °C) 168 Stunden einer NO₂-Atmosphäre ausgesetzt.

Die oxidierte Stärke wurde anschließend mit Wasser gewaschen, mit Aceton entwässert und im Vakuumtrockenschrank bei 60 °C getrocknet.

Erhalten wurden 158 g eines weißen, pulverförmigen Produktes mit einer SZ von 317 und einem mittleren Molekulargewicht (bestimmt in der wäßrigen Lösung des Natriumsalzes mittels GPC; Vergleichsstandard: Polyethylenglykole) von ca. 2 500.

### Beispiel 2

Analog Beispiel 1 wurden 100 g feuchte Kartoffelstärke 48 Stunden einer NO₂-Atmosphäre ausgesetzt. Nach Aufarbeitung wurden 77 g oxidierte Stärke mit einer SZ von 210 erhalten.

### Beispiel 3

Analog Beispiel 1 wurden 100 g feuchte Kartoffelstärke 24 Stunden lang einer NO₂-Atmosphäre ausgesetzt. Nach Aufarbeitung wurden 81 g oxidierte Stärke mit einer SZ von 95 erhalten.

### Beispiel 4

In einer Reihe von Vergleichsversuchen wurde das Sekundär-Waschergebnis - bestimmt als Gew.-% Gesamtinkrustation und Gew.-% Asche - ermittelt, wobei die nachfolgenden 3 Waschmittelrezepturen miteinander verglichen wurden:
1) Basisrezeptur eines Universal-Textilwaschmittels, das Zeolith NaA als Builder-Komponente, jedoch keinen zusätzlichen Co-Builder-Anteil enthält.
2) Basisrezeptur des Universal-Textilwaschmittels gemäß (1.), jedoch unter Zusatz praxisüblicher Mengen an einem Co-Builder-System aus synthetischem Polycarboxylat (Handelsprodukt Sokalan^{(R)} CP5) (3,8 Gew.-%), HEDP (0,4 Gew.-%) und Soda (12,5 Gew.-%) - Gew.-% jeweils auf Textilwaschmittelgesamtrezeptur bezogen.
3) Universal-Textilwaschmittel gemäß Basisrezeptur zu (1.) + 5,0 Gew.-% des oligomeren Oxidationsproduktes aus Beispiel 1.

Zur Bestimmung der Asche und der Inkrustation wurden als Gewebe Bleichnessel sowie Kontrollgewebe der Wäschereiforschungsanstalt Krefeld eingesetzt, wobei unter den nachfolgenden Bedingungen die Waschversuche durchgeführt wurden:
Temperatur, Flotte: 90°C, 120 ml
Waschmittel-Dosierung: 7,8 g/l
Wasserhärte: 30°dH
Beladung: Flottenverhältnis 1:12

Die an den frischen, nicht gewaschenen Testgeweben bestimmten Ausgangswerte für Asche bzw. Gesamtinkrustation betrugen bei Bleichnessel 0,22.

## Patentansprüche

1. Tensidhaltige Wasch- und/oder Reinigungsmittel, insbesondere Textilwaschmittel, enthaltend feinpartikuläre, unter Einsatzbedingungen unlösliche Builder-Komponenten zusammen mit einer untergeordneten Menge wenigstens anteilsweise löslicher Co-Builder, gewünschtenfalls zusammen mit Bleichmitteln, sowie weiteren üblichen Bestandteilen von Wasch und Reinigungsmitteln, dadurch gekennzeichnet, daß sie als Co-Builder Oxidationsprodukte von Polyglucosanen, die im statistischen Mittel zu wenigstens 15 Mol-% aus oxidierten Anhydroglucoseeinheiten der Formel I, 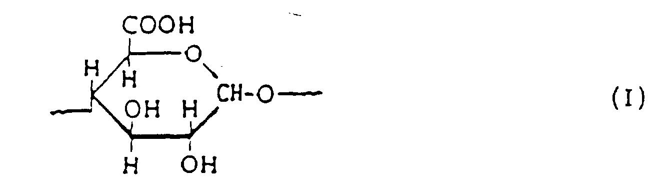 bestehen und mittlere Molekulargewichte unterhalb 15 000 aufweisen, und/oder deren lösliche Salze enthalten.

2. Wasch- und Reinigungsmittel nach Anspruch 1, dadurch gekennzeichnet, daß die Co-Builder die oxidierten Anhydroglucoseeinheiten der Formel I zu wenigstens 25 Mol-%, vorzugsweise zu wenigstens 35 Mol-% bis 40 Mol-% im Molekül enthalten, wobei weiterhin bevorzugt keine wesentlichen Mengen anderer Oxidations-Folgeprodukte im Co-Builder vorliegen.

3. Wasch- und Reinigungsmittel nach Anspruch 1 oder 2, dadurch gekennzeichnet, daß die Carboxylgruppen des Co-Builders wenigstens anteilsweise, bevorzugt wenigstens überwiegend als Alkalisalze, insbesondere in Form ihrer Natriumsalze vorliegen.

4. Wasch- und Reinigungsmittel nach einem der Ansprüche 1 bis 3, dadurch gekennzeichnet, daß als Co-Builder selektiv oxidierte Polyglucosane auf Cellulose- und/oder Stärkebasis vorliegen, die bei einem Gehalt an oxidierten Anhydroglucoseeinheiten der Formel I bis zu 95 Mol-%, bevorzugt im Bereich von 40 Mol-% bis 80 Mol-%, mittlere Molekulargewichte im Bereich von 1 000 bis 10 000 und vorzugsweise von 1 500 bis 5 000 aufweisen.

5. Wasch- und Reinigungsmittel nach einem der Ansprüche 1 bis 4, dadurch gekennzeichnet, daß sie Co-Builder auf Stärkebasis enthalten, die durch selektive Oxidation und vorzugsweise gleichzeitigen hydrolytischen Molekulargewichts-Abbau aus begrenzte Mengen Feuchtigkeit enthaltender Trockenstärke, insbesondere unter Verwendung von NO₂ als Oxidationsmittel, hergestellt worden sind.

6. Wasch- und Reinigungsmittel nach einem der Ansprüche 1 bis 5, dadurch gekennzeichnet, daß als wenigstens überwiegender Bestandteil des Co-Builders selektiv oxidierte Stärkederivate mit mittleren Molekulargewichten im Bereich von 1 500 bis 3 000 vorliegen, die bevorzugt durch Oxidation und hydrolytische Spaltung von feuchtigkeitshaltiger feinteiliger nativer Stärke als Wirbelschicht in einer NO₂/N₂O₄-haltigen Gasphase hergestellt worden sind.

7. Wasch- und Reinigungsmittel nach einem der Ansprüche 1 bis 6, dadurch gekennzeichnet, daß sie wenigstens weitgehend frei sind von wasserlöslichen organischen Komplexbildnern aus der Gruppe der synthetischen polymeren Carboxylate, der substituierten Phosphonate und/oder Salzen der Nitrilotriessigsäure und insbesondere auch phosphatfrei sind.

8. Wasch- und Reinigungsmittel nach einem der Ansprüche 1 bis 7, dadurch gekennzeichnet, daß sie als feinteiligen, unter Einsatzbedingungen unlöslichen Hauptbuilder entsprechende mineralische, zur Calciumbindung befähigte Komponenten wie Zeolithverbindungen, insbesondere Zeolith-NaA, kristalline Schichtsilikate und/oder Hydrotalcite enthalten.

9. Wasch- und Reinigungsmittel nach einem der Ansprüche 1 bis 8, dadurch gekennzeichnet, daß sie die Co-Builder auf Basis der selektiv oxidierten Polyglucosane in Mengen von 0,5 Gew.-% bis 10 Gew.-%, vorzugsweise 2 Gew.-% bis 7 Gew.-%, bezogen jeweils auf Gesamtgewicht des Mittels, enthalten.

10. Wasch- und Reinigungsmittel nach einem der Ansprüche 1 bis 9, dadurch gekennzeichnet, daß sie Zeolith-NaA als Hauptbuilder und den Co-Builder gemäß der Erfindung in Mengenverhältnissen des Hauptbuilders/Co-Builders von mindestens 3:1, insbesondere mindestens 4:1 enthalten.

11. Wasch- und Reinigungsmittel nach einem der Ansprüche 1 bis 10, dadurch gekennzeichnet, daß es ein Schüttgewicht im Bereich von 700 g/l bis 1200 g/l, insbesondere von 800 g/l bis 1000 g/l aufweist und
15 Gew.-% bis 25 Gew.-% Aniontensid,
1 Gew.-% bis 15 Gew.-% nichtionisches Tensid,
15 Gew.-% bis 40 Gew.-% Alkalialumosilikat, insbesondere Zeolith NaA,
2 Gew.-% bis 15 Gew.-% erfindungsgemäßen Cobuilder,
10 Gew.-% bis 30 Gew.-% Bleichmittel,
2 Gew.-% bis 10 Gew.-% Bleichaktivator,
bis zu 10 Gew.-%, vorzugsweise 1 Gew.-% bis 5 Gew.-% Alkalisilikat,
bis zu 15 Gew.-%, vorzugsweise 3 Gew.-% bis 12 Gew.-% Alkalicarbonat,
bis zu 4 Gew.-%, vorzugsweise 0,5 Gew.-% bis 3 Gew.-% Alkalisulfat,
0,1 Gew.-% bis 10 Gew.-% mindestens einer Substanz aus der Gruppe der Schauminhibitoren, Enzyme, Vergrauungsinhibitoren, optischen Aufheller, Farbstoffe, Stellmittel, Füllmittel, und
1 bis 20 Gew.-% Wasser enthält.

12. Wasch- und Reinigungsmittel, insbesondere Fein- und Buntwaschmittel, nach einem der Ansprüche 1 bis 10, dadurch gekennzeichnet, daß es ein Schüttgewicht im Bereich von 700 g/l bis 1200 g/l, insbesondere von 800 g/l bis 1000 g/l aufweist und
5 Gew.-% bis 15 Gew.-%, insbesondere 6 Gew.-% bis 13 Gew.-% anionisches Tensid, insbesondere aus der Gruppe der Fettalkoholsulfate,
10 Gew.-% bis 22 Gew.-%, insbesondere 12 Gew.-% bis 20 Gew.-% nichtionisches Tensid, insbesondere aus der Gruppe der Alkylpolyethylenglykolether,
20 Gew.-% bis 45 Gew.-%, insbesondere 25 Gew.-% bis 30 Gew.-% Alkalialumosilikat, insbesondere Zeolith NaA,
5 Gew.-% bis 20 Gew.-% erfindungsgemäßen Cobuilder,
2 Gew.-% bis 10 Gew.-%, insbesondere 4 Gew.-% bis 8 Gew.-% Alkalicarbonat,
bis zu 10 Gew.-%, insbesondere 1 Gew.-% bis 5 Gew.-% Alkalisilikat,
bis zu 4 Gew.-%, insbesondere 0,5 Gew.-% bis 3 Gew.-% Alkalisulfat,
0,1 bis 2,5 Gew.-% Schauminhibitor,
0,5 Gew.-% bis 5 Gew.-% Farbübertragungsinhibitor, insbesondere Polyvinylpyrrolidon,
0,1 Gew.-% bis 3 Gew.-% eines oder mehrerer Stoffe aus der Gruppe der Textilweichmacher, Vergrauungsinhibitoren, Farbstoffe und Duftstoffe, und
5 Gew.-% bis 20 Gew.-% Wasser enthält.

13. Verwendung von Oxidationsprodukten von Polyglucosanen, die im statistischen Mittel zu wenigstens 15 Mol-% aus oxidierten Anhydroglucoseeinheiten der Formel I, 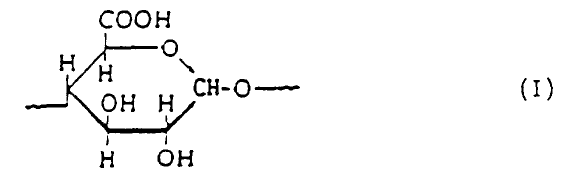 bestehen und mittlere Molekulargewichte unterhalb 15 000 aufweisen, und/oder deren löslichen Salzen zur Verringerung der Inkrustationsbildung bei der Textilwäsche mit phosphatfreien Textilwaschmitteln auf Basis feinteiliger unlöslicher, insbesondere mineralischer Builder-Komponenten, bevorzugt Zeolith NaA.

## Claims

1. Surfactant-containing detergents and/or cleaning formulations, more particularly laundry detergents, containing fine-particle builder components insoluble under in-use conditions together with a small quantity of at least partly soluble co-builders, if desired in conjunction with bleaching agents, and other typical constituents of detergents and cleaning formulations, characterized in that they contain as the co-builder component oxidation products of polyglucosans of which, on a statistical average, at least 15 mole-% consists of oxidized anhydroglucose units corresponding to formula I: 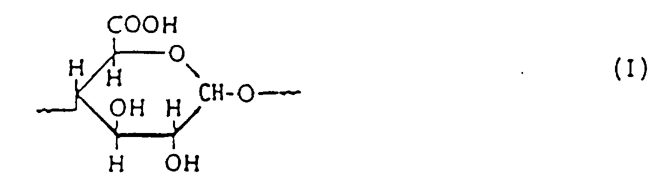 and which have average molecular weights below 15,000, and/or soluble salts thereof.

2. Detergents and cleaning formulations as claimed in claim 1, characterized in that the co-builders contain at least 25 mole-% and preferably at least 35 mole-% to 40 mole-% of the oxidized anhydroglucose units corresponding to formula I in the molecule, the co-builder preferably being free from significant quantities of other secondary oxidation products.

3. Detergents and cleaning formulations as claimed in claim 1 or 2, characterized in that the carboxyl groups of the co-builder are present at least partly and preferably at least predominantly as alkali metal salts, more particularly in the form of their sodium salts.

4. Detergents and cleaning formulations as claimed in any of claims 1 to 3, characterized in that the co-builders present are selectively oxidized cellulose-and/or starch-based polyglucosans which, for a content of oxidized anhydroglucose units of formula I of up to 95 mole-% and preferably in the range from 40 mole-% to 80 mole-%, have average molecular weights in the range from 1,000 to 10,000 and preferably in the range from 1,500 to 5,000.

5. Detergents and cleaning formulations as claimed in any of claims 1 to 4, characterized in that they contain starch-based co-builders which have been produced by selective oxidation and, preferably, simultaneous hydrolytic molecular weight reduction from limited quantities of moisture-containing dry starch, more particularly using NO₂ as oxidizing agent.

6. Detergents and cleaning formulations as claimed in any of claims 1 to 5, characterized in that selectively oxidized starch derivatives having average molecular weights in the range from 1,500 to 3,000, which have preferably been produced by oxidation and hydrolysis of moisture-containing fine-particle native starch in a fluidized bed in a gas phase containing NO₂/N₂O₄, are present as the at least predominant component of the co-builder.

7. Detergents and cleaning formulations as claimed in any of claims 1 to 6, characterized in that they are at least substantially free from water-soluble organic complexing agents from the group of synthetic polymeric carboxylates, substituted phosphonates and/or salts of nitrilotriacetic acid and, in particular, are also phosphate-free.

8. Detergents and cleaning formulations as claimed in any of claims 1 to 7, characterized in that they contain as fine-particle main builders insoluble under in-use conditions corresponding mineral components capable of binding calcium, such as zeolite compounds, more particularly zeolite NaA, crystalline layer silicates and/or hydrotalcites.

9. Detergents and cleaning formulations as claimed in any of claims 1 to 8, characterized in that they contain co-builders based on the selectively oxidized polyglucosans in quantities of 0.5% by weight to 10% by weight and preferably in quantities of 2% by weight to 7% by weight, based on the total weight of the detergent or cleaning formulation.

10. Detergents and cleaning formulations as claimed in any of claims 1 to 9, characterized in that they contain zeolite NaA as the main builder and the co-builder according to the invention in quantity ratios of the main builder to the co-builder of at least 3:1 and, more particularly, at least 4:1.

11. A detergent and cleaning formulation as claimed in any of claims 1 to 10, characterized in that it has an apparent density of 700 g/l to 1,200 g/l and, more particularly, 800 g/l to 1,000 g/l and contains
15% by weight to 25% by weight of anionic surfactant,
1% by weight to 15% by weight of nonionic surfactant,
15% by weight to 40% by weight of alkali metal alumosilicate, more particularly zeolite NaA,
2% by weight to 15% by weight of co-builder according to the invention,
10% by weight to 30% by weight of bleaching agent,
2% by weight to 10% by weight of bleach activator,
up to 10% by weight and preferably 1% by weight to 5% by weight of alkali metal silicate,
up to 15% by weight and preferably 3% by weight to 12% by weight of alkali metal carbonate,
up to 4% by weight and preferably 0.5% by weight to 3% by weight of alkali metal sulfate,
0.1% by weight to 10% by weight of at least one substance from the group of foam inhibitors, enzymes, redeposition inhibitors, optical brighteners, dyes and fillers and
1 to 20% by weight of water.

12. A detergent and cleaning formulation, more particularly a detergent for delicate and colored fabrics, as claimed in any of claims 1 to 10, characterized in that it has an apparent density of 700 g/l to 1,200 g/l and, more particularly, 800 g/l to 1,000 g/l and contains
5% by weight to 15% by weight and, more particularly, 6% by weight to 13% by weight of anionic surfactant, more particularly from the group of fatty alcohol sulfates,
10% by weight to 22% by weight and, more particularly, 12% by weight to 20% by weight of nonionic surfactant, more particularly from the group of alkyl polyethylene glycol ethers,
20% by weight to 45% by weight and, more particularly, 25% by weight to 30% by weight of alkali metal alumosilicate, more particularly zeolite NaA,
5% by weight to 20% by weight of co-builder according to the invention,
2% by weight to 10% by weight and, more particularly, 4% by weight to 8% by weight of alkali metal carbonate,
up to 10% by weight and, more particularly, 1% by weight to 5% by weight of alkali metal silicate,
up to 4% by weight and, more particularly, 0.5% by weight to 3% by weight of alkali metal sulfate,
0.1 to 2.5% by weight of foam inhibitor,
0.5% by weight to 5% by weight of dye transfer inhibitor, more particularly polyvinyl pyrrolidone,
0.1% by weight to 3% by weight of one or more substances from the group of fabric softeners, redeposition inhibitors, dyes and fragrances and
5% by weight to 20% by weight of water.

13. The use of oxidation products of polyglucosans of which, on a statistical average, at least 15 mole-% consists of oxidized anhydroglucose units corresponding to formula I: 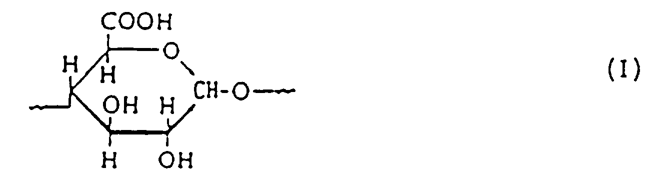 and which have average molecular weights below 15,000, and/or soluble salts thereof for reducing incrustation in the washing of laundry with phosphate-free laundry detergents based on fine-particle insoluble builder components, more particularly mineral builder components, preferably zeolite NaA.

## Revendications

1. Produits de lavage et/ou de nettoyage renfermant des tensioactifs, en particulier des produits de lavage des textiles, contenant des composants-adjuvants à fines particules, insolubles dans les conditions d'utilisation, conjointement avec une quantité secondaire de coadjuvant au moins partiellement soluble, le cas échéant en association avec des agents de blanchiment ainsi qu'avec d'autres constituants usuels des produits de lavage et de nettoyage, caractérisés en ce qu'ils renferment comme coadjuvants, des produits d'oxydation de polyglucosanes, qui sont constitués en moyenne statistique d'au moins 15 moles % d'unités oxydées d'anhydroglucose de la formule I, 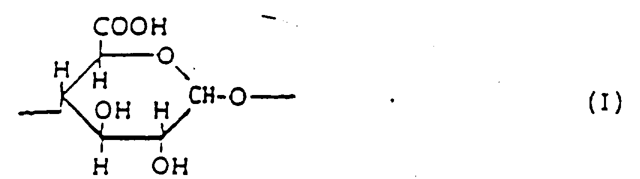 et présentent un poids moléculaire moyen inférieur à 15 000, et/ou leurs sels solubles.

2. Produits de lavage et de nettoyage selon la revendication 1, caractérisés en ce que les coadjuvants contiennent les unités oxydées d'anhydroglucose de la formule I à raison d'au moins 25 moles % en poids, de préférence d'au moins 35 à 40 moles % dans la molécule, avec en outre une préférence que le coadjuvant ne contienne pas de quantités importantes d'autres produits d'oxydation subséquents.

3. Produits de lavage et de nettoyage selon la revendication 1 ou 2, caractérisés en ce que les groupes carboxyle du coadjuvant sont présents au moins en partie, de préférence en majeure partie, comme sels de métaux alcalins, en particulier sous la forme de leurs sels de sodium.

4. Produits de lavage et de nettoyage selon une des revendications 1 à 3, caractérisés en ce que sont présents comme coadjuvants, des polyglucosanes sélectivement oxydés à base de cellulose et/ou d'amidon, qui présentent un poids moléculaire moyen se situant dans le domaine de 1000 à 10 000 et, de préférence de 1500 à 5000, pour un contenu en unités oxydées d'anhydroglucose de la formule I allant jusqu'à 95 moles %, de préférence compris dans l'intervalle de 40 à 80 moles %.

5. Produits de lavage et de nettoyage selon une des revendications 1 à 4, caractérisés en ce qu'ils renferment des coadjuvants à base d'amidon, qui sont fabriqués par oxydation sélective et, de préférence, réduction simultanée du poids moléculaire par hydrolyse, à partir d'amidon sec contenant des quantités limitées d'humidité, en particulier en utilisant du NO₂ comme oxydant.

6. Produits de lavage et de nettoyage selon une des revendications 1 à 5, caractérisés en ce qu'ils contiennent comme constituant au moins prépondérant du coadjuvant, des dérivés d'amidon sélectivement oxydés possédant un poids moléculaire moyen se situant dans le domaine de 1500 à 3000, qui sont fabriqués de préférence par oxydation et séparation par hydrolyse de l'amidon natif à fines particules contenant de l'humidité, comme couche fluidisée dans une phase gazeuse à NO₂/N₂O₄.

7. Produits de lavage et de nettoyage selon une des revendications 1 à 6, caractérisés en ce qu'ils sont au moins largement exempts d'agents complexants organiques solubles dans l'eau appartenant au groupe -des carboxylates polymères synthétiques, des phosphonates substitués et/ou des sels de l'acide nitrilotriacétique et, en particulier, également exempts de phosphates.

8. Produits de lavage et de nettoyage selon une des revendications 1 à 7, caractérisés en ce qu'ils renferment comme constituants principaux à fines particules, insolubles dans les conditions d'utilisation, des composants minéraux, aptes à la fixation du calcium correspondants, tels des composés de zéolithe, en particulier de zéolithe-NaA, des silicates stratifiés cristallins et/ou des hydrotalcites.

9. Produits de lavage et de nettoyage selon une des revendications 1 à 8, caractérisés en ce qu'ils renferment les coadjuvants à base des polyglucosanes sélectivement oxydés, en quantités de 0,5 à 10 % en poids, de préférence de 2 à 7 % en poids, dans chaque cas par rapport au poids total du produit.

10. Produits de lavage et de nettoyage selon une des revendications 1 à 9, caractérisés en ce qu'ils renferment de la zéolithe-NaA comme constituant principal et le coadjuvant conforme à l'invention en rapport pondéral entre le constituant principal et le coadjuvant d'au moins 3:1, en particulier d'au moins 4:1.

11. Produit de lavage et de nettoyage selon une des revendications 1 à 10, caractérisé en ce qu'il possède une densité en vrac comprise dans l'intervalle de 700 à 1200 g/l, en particulier, de 800 à 1000 g/l et contient
15 à 25 % en poids de tensioactif anionique,
1 à 15 % en poids de tensioactif non ionique,
15 à 40 % en poids d'un aluminosilicate de métal alcalin, en particulier de zéolithe NaA,
2 à 15 % en poids de coadjuvant conforme à l'invention,
10 à 30 % en poids d'agent de blanchiment,
2 à 10 % en poids d'activateur de blanchiment,
jusqu'à 10 % en poids, de préférence de 1 à 5 % en poids de silicate de métal alcalin,
jusqu'à 15 % en poids, de préférence de 3 à 12 % en poids de carbonate de métal alcalin,
jusqu'à 4 % en poids, de préférence de 0,5 à 3 % en poids de sulfate de métal alcalin,
0,1 à 10 % en poids, d'au moins une substance appartenant au groupe constitué des additifs anti-mousse, enzymes, inhibiteurs de ternissement, agents de blanchiment optique, colorants, agents de fixation, charges et
1 à 20 % en poids d'eau.

12. Produit de lavage et de nettoyage, en particulier produit de lavage pour la lingerie fine et le linge de couleur, selon une des revendications 1 à 10, caractérisé en qu'ils possède une densité en vrac comprise dans l'intervalle de 700 à 1200 g/l, en particulier de 800 à 1000 g/l, et contient
5 à 15 % en poids, en particulier 6 à 13 % en poids d'un tensioactif anionique, en particulier appartenant au groupe des sulfates d'alcools gras,
10 à 22 % en poids, en particulier 12 à 20 % en poids de tensioactif non ionique, en particulier appartenant au groupe des alkylpolyéthylèneglycoléthers,
20 à 45 % en poids, en particulier 25 à 30 % en poids d'aluminosilicate de métal alcalin, en particulier de zéolithe NaA,
5 à 20 % en poids de coadjuvant conforme à l'invention,
2 à 10 % en poids, en particulier 4 à 8 % en poids de carbonate de métal alcalin,
Jusqu'à 10 % en poids, en particulier 1 à 5 % en poids de silicate de métal alcalin,
Jusqu'à 4 % en poids, en particulier 0,5 à 3 % en poids de sulfate de métal alcalin,
0,1 à 2,5 % en poids d'additif anti-mousse,
0,5 à 5 % en poids d'inhibiteur de transfert de couleur, en particulier de polyvinylpyrrolidone,
0,1 à 3 % en poids d'une ou de plusieurs substances appartenant au groupe des assouplissants pour textiles, inhibiteurs de ternissement, colorants et matières odoriférantes, et
5 à 20 % en poids d'eau.

13. Utilisation des produits d'oxydation de polyglucosanes, qui sont constitués en moyenne statistique d'au moins 15 moles % d'unités oxydées d'anhydroglucose de la formule I 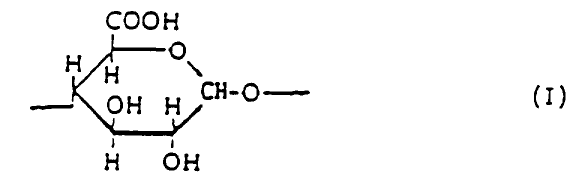 et présentent un poids moléculaire moyen inférieur à 15 000, et/ou de leurs sels solubles, pour la réduction de la formation d'incrustation lors du lavage des textiles par des détersifs pour textiles sans phosphates, à base de composants-adjuvants insolubles, à fines particules, en particulier minéraux, de préférence de zéolithe-NaA.
